# EUROPEAN PATENT APPLICATION

(11) **EP 2 554 036 A1**
(43) Date of publication of application: **06.02.2013**
(21) Application number: 12176510.1
(22) Date of filing: 16.07.2012
(51) Int. Cl.: A01B 63/24, A01C 7/20

(54) **A supplemental down force system and ground working implement with same**

(30) Priority: 01.08.2011 US 201113195125
(71) Applicant: DEERE & COMPANY, Moline, Illinois 61265-8098 (US)
(72) Inventor: Dochterman, Andrew C, Orion, IL Illinois 61273 (US); Frasier, Michael E, Iowa City, IA Iowa 52245 (US); Curry, Keith A, Eldridge, IA Iowa 52748 (US); Walter, Jason D, Bettendorf, IA Iowa 52722 (US)
(74) Representative: Reichert, Christian

(57) **Abstract**

A supplemental down force system is shown for a ground working implement (10) having a frame (12) and a plurality of ground engaging row units (30A, B, C, D, E, F) movably mounted to the frame (12) for up and down movement relative to the frame (12). The down force system includes at least one actuator (100) between the frame (12) and each row unit (30A, B, C, D, E, F) to apply an up or down force to each row unit (30A, B, C, D, E, F). The actuators (100) are assigned to one group of at least two groups of actuators (100). A control system (98) controls the down force applied by each group of actuators (100) separately so that each group of actuators (100) is given the amount of supplemental down force that group of row units (30A, B, C, D, E, F) needs. In a closed loop feedback system, at least one row unit (30A, B, C, D, E, F) in each group of row units (30A, B, C, D, E, F) is equipped with a load sensor (108) so that feed back of the soil reaction force on the row unit (30A, B, C, D, E, F) is supplied to the control system (98).

## Description

The field relates to a supplemental down force system for a ground working implement comprising: at least one actuator between a frame and a row unit to apply a force to the row unit to produce a desired soil reaction force acting on the row unit; and a control system operably connected to the at least one actuator to control the actuator to vary the force applied by the at least one actuator to the associated row unit.

Ground engaging implements typically have tools, or other devices that engage and work the ground. For example, a typical row crop planter has a number of planting row units that put seed in the ground as the machine is moved over a field. Each row unit is equipped with a furrow opener that opens a furrow in the soil into which seed is deposited and then covered. A depth gauge device, typically a gauge wheel, is set at a predetermined position to control how deep the opener cuts the furrow into the soil. The row units are mounted to the machine frame for vertical movement relative to the frame so that the row units can follow the ground contours. The row units must have sufficient weight to force the opener fully into the soil to the desired depth. More weight is needed for firmer soils than for light, sandy soils. The row units may not have sufficient weight to fully penetrate the opener into the soil. To overcome this problem, row units are typically provided with a down force system that transfers weight from the machine frame to the row unit. The downforce system may be a mechanical spring connected between the frame and row unit to force the row unit down. Such systems are adjustable so that the operator can adjust the amount of added or supplemental down force.

More recently, mechanical springs have been replaced with pneumatic down force actuators or cylinders. The amount of supplemental down force applied to the row unit is varied by changing the air pressure in the actuators. This is accomplished by a pneumatic control circuit connected to a supply of compressed air from an air compressor. Adjustment of the down force with a pneumatic system is much easier then manually changing the setting of the mechanical springs on each row unit.

Still further improvements in down force systems provide a closed loop feed back control of the pneumatic actuators. Three to five row units are equipped with load sensors that measure the soil reaction load applied to the gauge wheels or other depth gauge device. If the opener is fully penetrating, the gauge wheel will be in contact with the soil. Typically some load greater than zero is desired on the gauge wheel to ensure that the gauge wheel stays in contact with the ground at all times. The load on the gauge wheels will vary over a range due to the dynamics conditions in which the planter is operating. Thus a nominal load on the gauge wheel is necessary so that in the dynamic range, the load on the gauge wheel does not go to or below zero. The operator selects the magnitude of the desired force on the gauge wheels and the control system increases or decreases the pressure in the pneumatic cylinders to produce this desired force. Some systems include, in addition to the down force cylinder, an up force actuator or cylinder to apply an upward force on the row unit when the weight of the row unit exceeds the needed down force. Alternatively, an up lift cylinder can be used in combination with a mechanical spring down force system. The springs are set to produce more down force than needed and the up lift cylinder is used to counter act the down force to fine-tune the total load on the row unit.

The loads sensed by the three to five sensors are averaged to determine the needed supplemental down force. The pneumatic actuators are then all supplied with the same air pressure to produce the desired soil reaction force on the gauge wheels. However, due to the geometry of the planting machine, all row units may not need to the same air pressure in the actuators to produce the needed down force.

Accordingly, one object of this invention is to overcome the above mentioned problems.

The object will be achieved by the teaching of claims 1 and 5. Further advantageous embodiments are described within the accompanying claims.

Accordingly, a supplemental down force system of the above mentioned type comprises that the at least one actuator is assigned to one group of at least two groups of actuators the control system configured to control each group of actuators independent of another group of actuators to enable the actuators of one group to apply a different force to the row unit as compared to the actuators of another group.

A supplemental downforce system is provided for a ground working implement having a frame and a plurality of ground engaging row units movably mounted to the frame for up and down movement relative to the frame. The downforce system includes at least one actuator between the frame and each row unit to apply an up or down force to each row unit. The actuators are assigned to one group of at least two groups of actuators. A control system controls the down force applied by each group of actuators separately so that each group of actuators is given the amount of supplemental down force that group of row units needs. In a closed loop feedback system, at least one row unit in each group of row units is equipped with a load sensor so that feed back of the soil reaction force on the row unit is supplied to the control system.
Fig. 1 is a perspective view of a ground engaging implement in the form of an agricultural row crop planter;
Fig. 2 is a side elevational view of a row unit of the planter illustrated in Fig. 1; and
Fig. 3 is a schematic diagram of the pneumatic system for supplying supplemental down force to the row units.

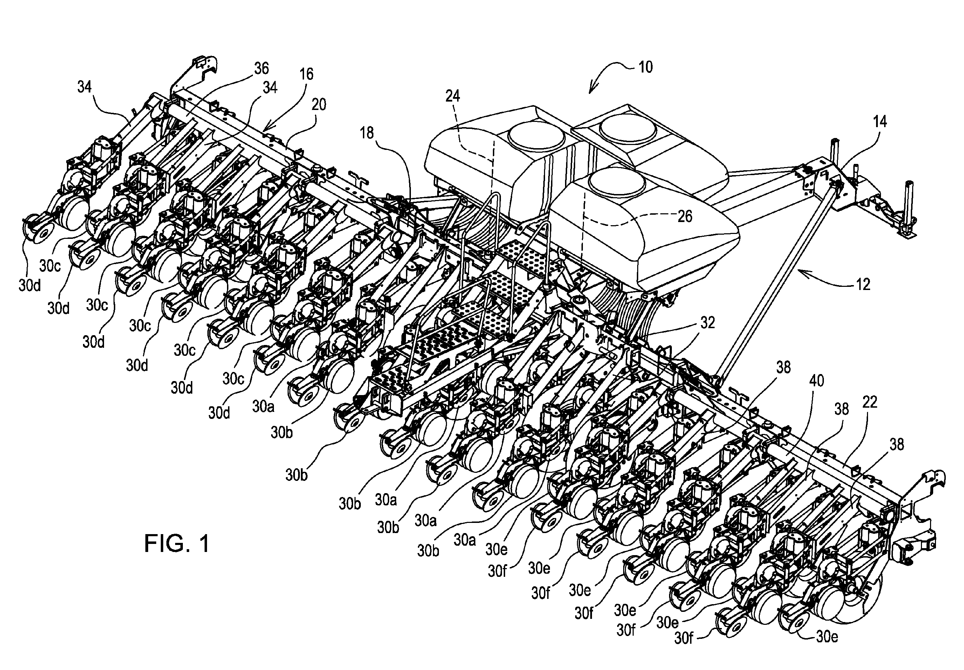

With reference to Fig. 1, a ground engaging implement, in the form of a row crop planter 10 is shown. Planter 10 is a John Deere 1790 model planter. Planter 10 has a frame 12 including a tongue 14 and transverse draw bar 16. Draw bar 16 has a main center section 18 rigidly connected to the tongue 14, a left wing section 20 and a right wing section 22. The left and right wing sections are pivotally mounted to the main center section 18 with the left wing section 20 pivoting about an axis 24 while the right wing section pivots about an axis 26. The wings are shown in Fig. 1 in an operating position. For transport, the wings are pivoted forwardly about the axes 24 and 26.

A number of row units 30 are mounted to the draw bar 16. The row units form ground engaging tools that work in the soil as the machine is operated. Row units 30A form a front rank of row units mounted to the main center section 18 of the frame, not all of which are visible in Fig. 1. Row units 30B, each mounted by rearward extending arms 32 to the main center section, form a rear rank of row units positioned further rearward of the front rank of row units 30A. Left wing section 20 has a front rank of row units 30C and a rear rank of row units 30D. Rear rank row units 30D are mounted to the left wing section 20 through rearward extending arms 34 coupled to a rock shaft 36 that is in turn, rotatably mounted to the left wing section 20. Right wing section 22 has a front rank of row units 30E and a rear rank of row units 30F. Rear rank row units 30F are mounted to the right wing section 22 through rearward extending arms 38 coupled to a rock shaft 40 that is also rotatably mounted to the right wing section 22. The planter is configured to plant some seeds, such as soy beans, in 15 inch rows with all row units 30(A, B, C, D, E and F) and to plant other seeds, such as corn, in 30 inch rows with the front rank row units 30(A, C and E). Corn planting is accomplished by rotating the rock shafts 36 and 40 to raise the row units 30D and 30F. Row units 30B of the rear rank on the main center section are raised by lifting the row units through parallel linkages described below and latching in the raised position.

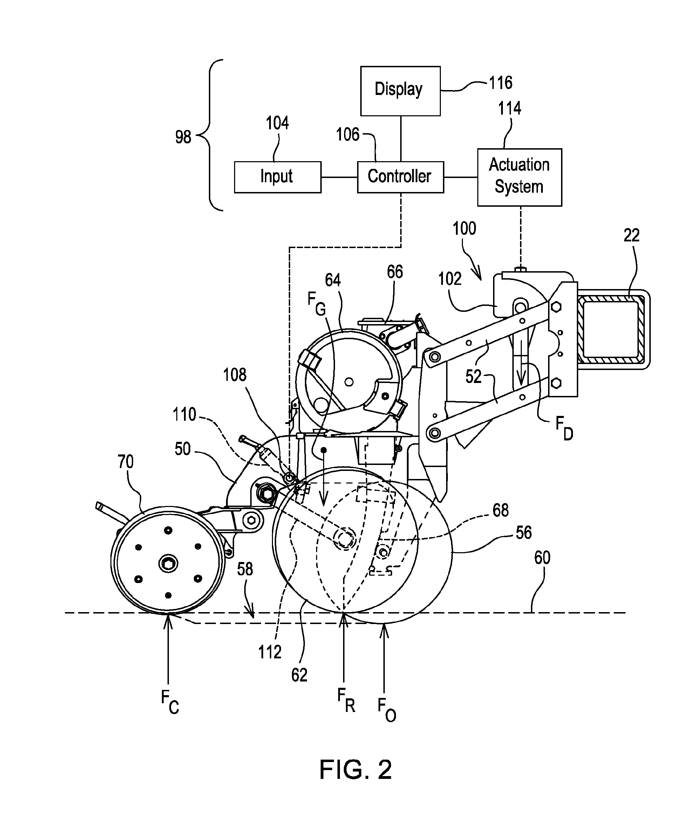

With reference to Fig. 2, a row unit 30E is shown in greater detail. Row unit 30E includes a row unit frame 50 which is attached to the right wing section 22 by parallel linkage 52. Linkage 52 permits up and down movement of the row unit relative to the tool bar. Row unit frame 50 carries a double disc furrow opener 56 for forming a seed furrow 58 in soil or ground 60. A pair of gauge wheels 62 is provided which function as a furrow depth regulation device. The gauge wheels are respectively associated with the pair of discs of double disc furrow opener 56. More particularly, each gauge wheel 62 is positioned slightly behind and immediately adjacent to the outside of each respective disc of double disc furrow opener 56. Other gauge wheel locations are possible. The gauge wheels 62 are vertically adjusted relative to the opener discs to adjust the depth of the furrow 58 which is cut into the soil by the double disc opener. An adjustment link 110 is pivotally coupled to the row unit frame at pin 108 and bears against the top of pivot arms 112 which carry the gauge wheels. Upward movement of the gauge wheels relative to the frame and opener discs is stopped by the adjustment link 110.

A seed meter 64 is also carried by row unit frame 50. Seed meter 64 receives seed from a seed hopper 66. The seed meter drive is not shown; numerous types of drive mechanisms are well known. Seed meter 64 delivers seeds sequentially to a seed tube 68 through which the seed falls by gravity to the furrow 58. The seed meter 64 and seed tube 68 form a product dispenser to dispense product to the furrow 58.

A pair of closing wheels 70 follows behind the gauge wheels and are positioned generally in line with double disc furrow opener 56. Closing wheels 70 are preferably biased in a downward direction and have a peripheral edge with a shape which may vary, depending upon the application. Closing wheels 70 push soil back into the furrow 58 to cover the seed or product deposited therein and may also pack the soil.

A supplemental down force system includes, on the row unit 30E, a down force actuator 100 in the form of an adjustable pneumatic down force cylinder 102. The cylinder 102 acts between the draw bar, that is, the right wing section 22, and the parallel links 52 to apply down force on the row unit and the row unit components engaging the soil. The down force applied by the cylinder 102 ensures that there is sufficient force to fully insert the double disc furrow opener 56 into the soil, forming the furrow 58 to the desired depth. The down force applied to the row unit by the cylinder 102 is shown by the arrow F_{D}. While only a down force cylinder is shown, there may also be an up force, or lift cylinder. In other systems, there may be an adjustable spring providing a down force together with a pneumatic lift cylinder to fine tune the total down force on the row unit. In such a system, the spring would be set to provide a down force that is greater than what is needed at any time and the lift cylinder would be controlled to counter-act a portion of the spring down force to produce a desired total down force. Arrow F_{D} represents the entire downforce applied to the row unit.

The row unit weight also produces a down force shown by the arrow F_{G} acting through the center of gravity of the row unit. The force F_{G} varies over time as the level of product in the seed hopper 66 and other hoppers (not shown) changes during operation of the planter 10. (The hopper 66 is relatively small and the amount of product therein does not change appreciably. However, other row unit configurations may have larger product hoppers.) These two downward acting forces, F_{D} and F_{G} are counter-acted by upward forces acting on the row unit. The opener penetrates the soil and has a force F_{O} acting upward on the opener. When the opener 56 is fully penetrating, the gauge wheels 62 will be in contact with the soil and a soil reaction force F_{R} acts upward on the gauge wheels. An additional upward force on the row unit is the force F_{C} acting on the closing wheels 70. Other attachments to the row unit, not shown, such as a coulter or row cleaner will also generate an upward force on the row unit. In systems with a lift cylinder, the down force F_{D}, may at times be positive and at times negative, meaning it may be directed downward or upward. The force F_{O} will vary during operation with the dynamics of operation, i. e. bouncing in the field, and also with changing soil conditions. For example, at the top of a hill, the soil may be dryer and harder, requiring more force F_{O} to fully penetrate the opener as compared to wetter, softer, soil at the bottom of a hill. If the down force F_{D} is fixed, such as with mechanical springs, when the opener force F_{O} increases, the gauge wheel soil reaction force F_{R} will decrease.

A minimum soil reaction force F_{R} acting on the gauge wheels 62 is desired to have confidence that the opener is fully penetrating the soil to the desired depth. If the reaction force F_{R} acting on the gauge wheel is zero, the gauge wheel is not touching the soil. This occurs when the opener is not fully penetrating the soil to the desired depth. Thus, some level of reaction force F_{R} greater than zero is desired to be maintained to ensure there is full penetration by the opener.

The pressure in the cylinders is controlled by an electronic controller 106 that connects to an actuation system 114. An input device 104 allows the operator to command the system. In an open-loop system, the operator uses the input device to input commands to increase or decrease the cylinder inflation pressures. The controller 106 then implements the command by actuating the appropriate valves in the actuation system 114. The operator first inflates the pneumatic cylinders 102 to a desired inflation pressure that will keep the opener fully penetrating. The operator will observe the row unit performance and make adjustments to the cylinder inflation. In the open loop system, the pneumatic cylinders provide an advantage over mechanical springs in that adjustment only requires activation through the input device 104 and not manual adjustment of springs on each row unit.

In a closed-loop system, the operator uses the input device 104 to input into the controller 106 a desired reaction force F_{R} to be maintained on the gauge wheels. The controller 116 operates an actuation system 114 to change the air pressure in the cylinders 102 in response to changes in the opener force F_{O}. Changes in force F_{O} are determined by measuring the soil reaction force F_{R} acting on the gauge wheels. The magnitude of the force F_{R} is measured by a sensor or load cell that can be located in a variety of locations on the row unit. One example is a load sensor pin 108 in the gauge wheel depth adjustment link 110. Adjustment link 110 bears against and resists upward movement of the pivot arm 112 carrying the gauge wheels 62. A suitable load sensor pin is shown in W02008/086283 A2. Multiple row units are equipped with a load sensor but not all row units need a sensor. A typical current production down force system may have three to five row units equipped with load sensors. The loads sensed by the sensors are averaged to determine the needed supplemental down force. The pneumatic cylinders 102 are then all supplied with the same air pressure to produce the desired reaction force F_{R} on the gauge wheels. But not all row units need the same supplemental down force. Differences may be caused by different soil conditions experienced by different parts of the machine. Other differences in the needed supplemental down force may be caused by the planter frame geometry. For example, the front rank row units may need a different air pressure than do the rear ranks of row units to produce the desired down force. The wing section row units may need a different down force than the center main section row units.

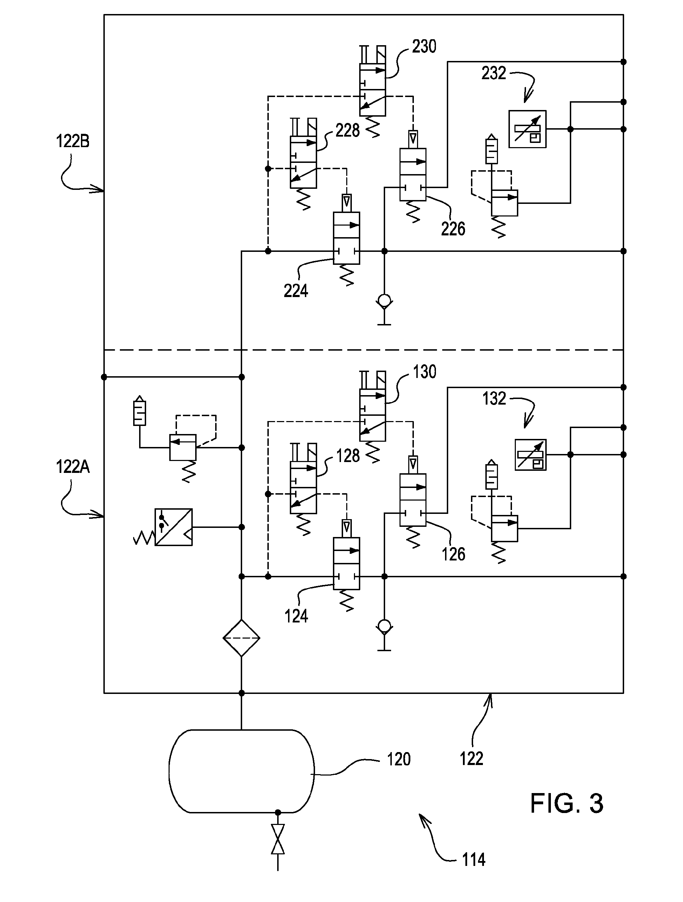

The controller 106 and the actuation system 114 are configured to control the supplemental down force in two or more groupings of row units. In the following example two groups of row units are controlled separately; the front rank row units and the rear rank row units. Those skilled in the art will appreciate that any number of row unit groups can be provided. The actuation system 114 is shown and described in connection with Fig. 3. A compressed air tank 120 is supplied with compressed air from a compressor (not shown) in a conventional manner. Tank 120 is connected to and supplies air to a pneumatic valve block 122. The lower half 122A of the valve block controls air to one group of row units while the upper half 122B of the valve block controls air to the other group of row units. In the lower half 122B of the valve block 122, a normally-closed, two-way valve 124 controls the flow of air to the cylinders 102. Another normally-closed, two-way valve 126 is opened to release air from the cylinders 102. Each of valves 124 and 126 are pilot operated with the pilot pressure controlled by solenoid valves 128 and 130 respectively. In operation, when the controller 106 calls for more air pressure in the cylinders 102, the solenoid valve 128 is actuated to open the valve 124 allowing air to flow from the tank 120 to the cylinders 102. Pressure sensor 132 senses the pressure in the cylinders 102. When the controller determines the pressure in the cylinders is too high, the valve 126 is opened to exhaust air and reduce the pressure in the cylinders 102. The pneumatic cylinders 102 in the other rank of row units are controlled by valves 224 and 226 and solenoid valves 228 and 230 in the upper half of the valve block 122B. For systems with up-force cylinders in addition to the down-force cylinders 102, additional valves are included in the valve block. If the cylinders 102 are up-force cylinders used with mechanical down-force springs, the valves are the same but operated accordingly to produce the desired total down force F_{D}.

At least one row unit in each group of row units will have a load sensor 108 for determining the load F_{R} acting on the gauge wheel. If more than one sensor is provide in the rank, then the values of the load sensors are averaged and the average value used to determine the air pressure to apply to the cylinders 102 of that rank of row units.

The down force system includes the actuators or cylinders 102, either down force or up force or both, together with a control system 98. The control system 98 has an input device 104, an electronic controller 106 and an actuation system 114 to implement the commands from the controller, typically opening and closing valves. It is desirable to include a display 116 to convey information back to the operator such as the commanded load and the measured loads. While the control system is shown with separate components, they can be combined into one or more components with appropriate connections.

A closed-loop control system has been described above. In an open-loop system without the load sensors 108, the operator monitors the furrow opening and closing and manually actuates the pneumatic system valves to adjust the air pressure in the cylinders 102 of each rank separately. Obviously, this manual adjustment will be done infrequently as compared to the continuously monitored closed-loop system.

Those skilled in the art will appreciate that any number of row unit groups can be provided for. The only limitation is one of cost versus benefit. At some point, the cost of adding another group will outweigh the benefit in terms of increased yield from improved planter performance.

The supplemental down force system has been shown and described as a pneumatic system. However, other systems can be used in place of pneumatic such as hydraulics or electro-mechanical systems.

A towed implement has been shown and described. It is apparent that this could be a self-propelled machine instead of a towed implement. No distinction or limitation is intended by the use of the term "implement."

The supplemental down force system has been described in the context of a row crop planter. However, the down force system can be applied to any agricultural implement having ground working tools such as a grain drill, air seeder, tillage tool, nutrient applicator, etc and can also be applied to non-agricultural machines that engage and work the ground.

Having described the system, it will become apparent that various modifications can be made without departing from the scope of the invention as defined in the accompanying claims.

## Claims

1. A supplemental down force system for a ground working implement (10) comprising: a frame (12) and at least one row unit (30, 30A, 30B) movably mounted to the frame (12) for movement relative to the frame (12), at least one actuator (100) between the frame (12) and the at least one row unit (30, 30A, 30B) to apply a force to the row unit (30A, B, C, D, E, F) to produce a desired soil reaction force acting on the row unit (30A, B, C, D, E, F); and a control system (98) operably connected to the at least one actuator (100) to control the actuator (100) to vary the force applied by the at least one actuator (100) to the associated row unit (30A, B, C, D, E, F), **characterized in that** the at least one actuator (100) is assigned to one group of at least two groups of actuators (100) the control system (98) configured to control each group of actuators (100) independent of another group of actuators (100) to enable the actuators (100) of one group to apply a different force to the row unit (30A, B, C, D, E, F) as compared to the actuators (100) of another group.

2. The supplemental down force system of claim 1 wherein the control system (98) is closed loop having a controller (106) operating the actuators (100) and, for each group of row units (30A, B, C, D, E, F), at least one row unit (30A, B, C, D, E, F) having a load sensor (108) to measure the soil reaction force acting on that row unit (30A, B, C, D, E, F), the sensor (108) supplying a load input signal to the controller (106).

3. The supplemental down force system of claim 1 or 2 wherein the control system (98) includes a controller (106), an operator input device (104) and a valve system.

4. The supplemental down force system of claim 3 wherein the actuators (100) are pneumatic cylinders (102) and wherein the valve system includes a pneumatic valve block (122, 122B) with valves (124, 126, 128, 130) to direct compressed air to and from the actuators (100).

5. A ground working implement (10) comprising a frame (12) and a plurality of ground engaging row units (30A, B, C, D, E, F) movably mounted to the frame (12) for vertical movement relative to the frame (12), **characterized in** further comprising a supplemental down force system according to one of the claims 1 to 4.
